## Europäisches Patentamt
## European Patent Office
## Office européen des brevets

(19)

(11) Veröffentlichungsnummer: **0 166 318**
**B1**

(12) **EUROPÄISCHE PATENTSCHRIFT**

(45) Veröffentlichungstag der Patentschrift: **24.10.90**

(51) Int. Cl.⁵: **H 04 Q 3/42, H 04 M 3/42**

(21) Anmeldenummer: **85107322.1**

(22) Anmeldetag: **13.06.85**

(54) Einrichtung zur Erkennung und Umsetzung von Wahlinformation sowie von Steuerinformation für Leistungsmerkmale einer Fernsprechvermittlungsanlage.

(30) Priorität: **16.06.84 DE 3422409**

(43) Veröffentlichungstag der Anmeldung:
**02.01.86 Patentblatt 86/01**

(45) Bekanntmachung des Hinweises auf die Patenterteilung:
**24.10.90 Patentblatt 90/43**

(84) Benannte Vertragsstaaten:
**AT CH DE FR GB LI NL**

(56) Entgegenhaltungen:
EP-A-0 027 596
EP-A-0 045 941
EP-A-0 105 441
DE-A-3 229 658

(73) Patentinhaber: **Standard Elektrik Lorenz Aktiengesellschaft**
**Lorenzstrasse 10**
**D-7000 Stuttgart 40 (DE)**
(84) **DE**

(73) Patentinhaber: **ALCATEL N.V.**
**Strawinskylaan 537 (World Trade Center)**
**NL-1077 XX Amsterdam (NL)**
(84) **CH FR GB LI NL AT**

(72) Erfinder: **Immendörfer, Manfred**
**Grabenstrasse 5**
**D-7257 Ditzingen 3 (DE)**
Erfinder: **Kopp, Dieter**
**Hirschstrasse 34**
**D-7251 Hemmingen (DE)**
Erfinder: **Thierer, Gebhard**
**Breslauer Strasse 1**
**D-7257 Ditzingen (DE)**
Erfinder: **Seichter, Helmut**
**Elsterweg 112/2**
**D-7417 Pfullingen (DE)**

(74) Vertreter: **Villinger, Bernhard, Dipl.-Ing. et al**
**Standard Elektrik Lorenz AG Patent- und Lizenzwesen Postfach 30 09 29**
**D-7000 Stuttgart 30 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft eine Einrichtung zur Erkennung und Umsetzung von Wahlinformation sowie von Steuerinformation für Leistungsmerkmale einer Fernsprechvermittlungsanlage, mit einer sprachgesteuerten Wahlempfängereinheit, die eine Spracherkennungseinrichtung und eine Steuereinheit enthält.

Bei einer Fernsprechvermittlungsanlage ist es bekanntlich möglich, daß über die angeschlossenen Fernsprechstellen das Wahlziel entweder mit Hilfe einer Wählscheibe oder über ein Nummerntastenfeld eingegeben wird.

Im folgenden wird von dem modernen Nummerntastenfeld ausgegangen, wobei das Mehrfrequenzcode-Wahlverfahren eingesetzt wird.

Beim Abnehmen eines Handapparates der Fernsprechstelle wird diese über eine Teilnehmerschaltung und ein Koppelnetz mit einer Mehrfrequenzcode-Wahlempfängereinheit verbunden. Die über das Nummerntastenfeld eingegebene Ziffernfolge einer gewünschten Rufnummer oder eines Leistungsmerkmals der Fernsprechvermittlungsanlage wird in der Mehrfrequenzcode-Wahlempfängereinheit detektiert, in entsprechende Steuerzeichen gewandelt und zu einer Vermittlungssteuereinheit der Fernsprechvermittlungsanlage zum weiteren Verbindungsaufbau übertragen.

Trotz der Möglichkeit der schnellen Eingabe von selbst großen Rufnummern über das Nummerntastenfeld der Fernsprechstelle, dem Abrufen von Kurzwahlzielen oder dem Aktivieren von Leistungsmerkmalen, wie z.B. das Rufumleiten oder die Rückrufautomatik in einer Nebenstellenanlage, besteht für den Teilnehmer der große Nachteil, daß er diese Dienste nur durch Eingabe einer Vielzahl unterschiedlicher Ziffernfolgen nutzen kann.

Somit ist der Teilnehmer gezwungen, diese Ziffernfolgen entweder im Gedächtnis zu behalten oder in einem Verzeichnis nachschlagen zu müssen. Außerdem muß er bei einer konventionellen Fernsprechvermittlungsanlage eine Vielzahl unterschiedlicher Tonfolgen, wie z.B. Besetzton, Freizeichen, unterscheiden können.

Es ist bereits ein Fernsprechvermittlungssystem für öffentliche oder private Wählnetze mit zumindest einer zentralen Wahlinformations-Aufnahme/Verarbeitungs-Einrichtung bekannt, der eine Spracherkennungs/Auswerte-Einrichtung vorgeordnet ist, die aus einem Spracherkennungsgerät und einem Auswerte-Prozessor besteht (EP-A1-0 105 441). Dies erlaubt eine Auswertung von gesprochener Wahlinformation, wobei aufgrund der zentralen Anordnung das Fernsprechvermittlungssystem entsprechend aufwendig ausgelegt werden muß.

Der Erfindung liegt die technische Aufgabe zugrunde, eine Einrichtung zur Erkennung und Umsetzung von Wahlinformation sowie von Steuerinformation für Leistungsmerkmale einer Fernsprechvermittlungsanlage zu schaffen, die einem Benutzer Eingaben durch Sprache und/oder über eine Tastatur derart ermöglicht, daß die Fernsprechvermittlungsanlage möglichst wenig verändert werden muß.

Die Aufgabe wird erfindungsgemäß durch die technische Lehre des Patentanspruchs 1 gelöst.

Ein Vorteil der Einrichtung nach der Erfindung liegt darin, daß der Teilnehmer nicht nur durch die konventionelle Eingabe von Ziffernfolgen über ein Nummerntastenfeld einer Fernsprechstelle, sondern auch durch Spracheingabe in Form von Wörtern und/oder Ziffern über ein Mikrofon eines Handapparates der Fernsprechstelle sein Wahlziel eingeben oder angebotene Leistungsmerkmale insbesondere von Nebenstellenanlagen aktivieren kann.

Vorteilhafte Weiterbildungen sind in den Unteranspruchen gekennzeichnet.

Ein Ausführungsbeispiel wird im folgenden anhand der Zeichnungen erläutert. Es zeigen:

Figur 1 eine schematische Darstellung einer Fernsprechvermittlungsanlage mit einer erfindungsgemäßen Einrichtung, und

Figur 2 ein Blockschaltbild einer Einrichtung nach der Erfindung.

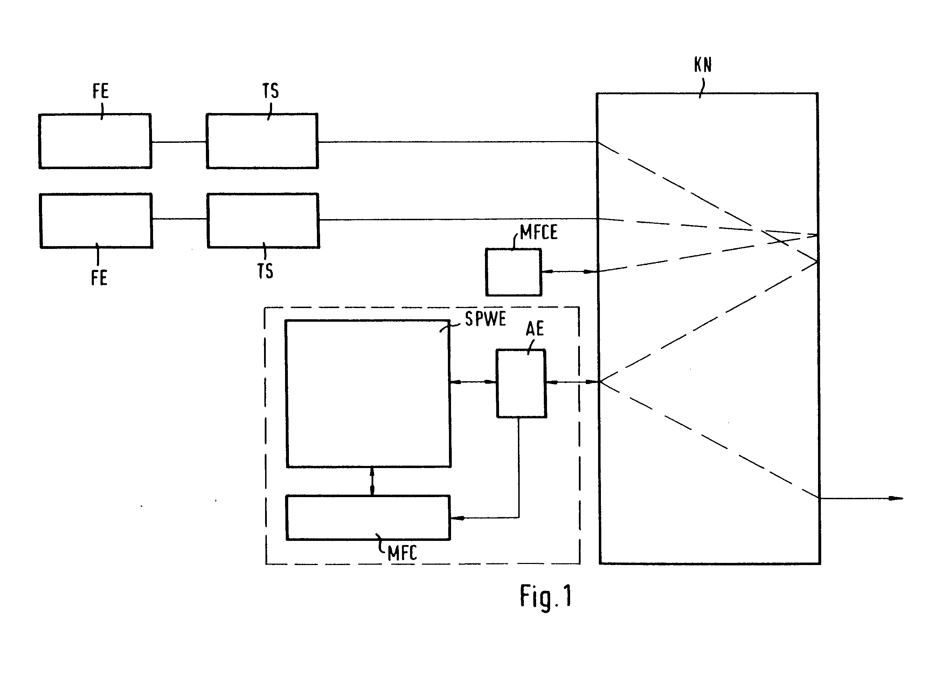

In einer Fernsprechvermittlungsanlage, wie in Fig. 1 schematisch gezeigt, sind Fernsprechstellen FE über Teilnehmerschaltungen TS an ein Koppelnetz KN angeschlossen.

Dabei wird im folgenden vorausgesetzt, daß die Fernsprechstelle FE nur mit modernen Nummerntastenfeldern ausgerüstet sind und daß das Mehrfrequenzcode-Wahlverfahren verwendet wird.

Durch die Abnahme eines Handapparates der Fernsprechstelle FE wird der Teilnehmer durch eine hier nicht näher dargestellte Vermittlungssteuereinheit über das Koppelnetz KN mit einer üblichen Mehrfrequenzcode-Wahlempfängereinheit MFCE zur Wahlzielaufnahme verbunden.

Anstelle der Mehrfrequenzcode-Wahlempfängereinheit MFCE wird nun in der Fernsprechvermittlungsanlage in Fig. 1, durch gestrichelte Linien umrandet dargestellt, die erfindungsgemäße Einrichtung angeschlossen.

Sie weist eine sprachgesteuerte Wahlempfängereinheit SPWE auf, die mit einer als Schnittstelle zum Koppelnetz KN ausgebildeten Anpassungseinheit AE verbunden ist. Weiterhin ist ein Mehrfrequenzcode-Wahlempfänger MFC zur Detektion der über das Nummerntastenfeld der Fernsprechstelle FE eingegebenen Ziffernfolge parallel zur sprachgesteuerten Wahlempfängereinheit SPWE geschaltet und an die Anpassungseinheit AE geführt.

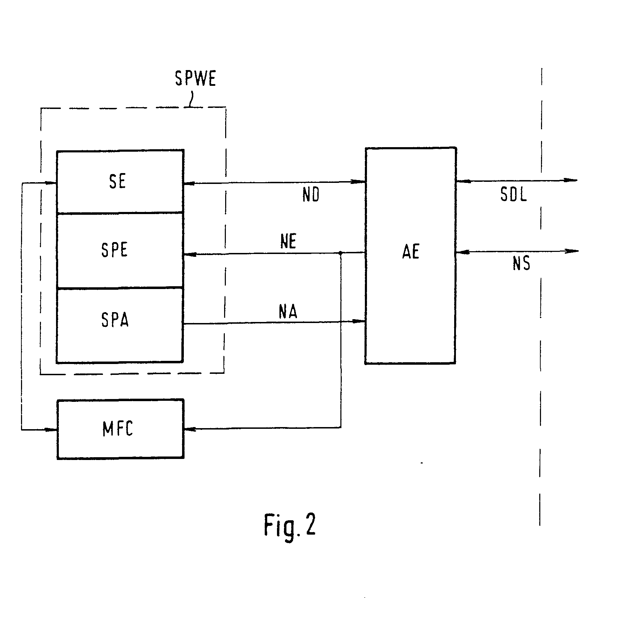

Wie in Fig. 2 zu entnehmen ist, enthält die sprachgesteuerte Wahlempfängereinheit SPWE eine Spracherkennungseinrichtung SPE, eine Sprachausgabeeinheit SPA und eine Steuereinheit SE. Die Spracherkennungseinrichtung SPE ist über einen ersten Nachrichtenweg NE, die Steuereinheit über einen zweiten Nachrichtenweg ND und die Sprachausgabeeinheit SPA über einen dritten Nachrichtenweg NA an die Anpassungseinheit AE angeschlossen. Ferner ist die Anpassungseinheit AE über einen vierten Nachrichtenweg NS und über eine Steuer- und Datenleitung SDL an das Koppelnetz KN und somit an die Fernsprechvermittlungsanlage geführt.

Der Teilnehmer gibt nun akustisch über ein Mikrofon des Handapparates und/oder durch Zifferneingabe über das Nummerntastenfeld der Fernsprechstelle FE Wahlinformation sowie Steuerinformation zum Aktivieren von Leistungsmerkmalen einer Fernsprechvermittlungsanlage ein.

Diese Wahl- und Steuerinformation besteht z.B. aus den im folgenden aufgeführten als Wörter eingebbaren Begriffen.

Namen von Firmen oder Personen.

Kurzwahlziele.

Dienstleistungsstellen oder aus akustischer Eingabe von Ziffernfolgen.

In einer Nebenstellenanlage besteht der sprachliche Zugriff auf z.B. die folgenden Leistungsmerkmale:

Rufumleitung.

Rückrufautomatik.

Aktivierung bzw. Inaktivierung des Anrufschutzes.

Außerdem kann akustisch auf Datenbanken und Informationssysteme, (z.B. Steuerung eines Sprachspeichersystems) die mit der Fernsprechvermittlungsanlage verbunden sind, zuge griffen werden. Auch die kombinierte Eingabe per Sprache und per Nummerntastenfeld ist gegeben, wobei zuerst akustisch das Leistungsmerkmal (z.B. "Rufumleitung") eingegeben und anschließend manuell die gewünschte Nummer eingetippt wird.

Damit nun jeder Teilnehmer eine solche "Sprachsteuerung" nutzen kann, sind in der Spracherkennungseinrichtung SPE in einem Speicher die akustischen Muster der durch Sprache eingebbaren Wörter und/oder Ziffern, sogenannte Referenzmusterdaten, abgespeichert.

Durch die Abnahme des Handapparates der Fernsprechstelle FE wird zunächst anstelle der üblichen Mehrfrequenzcode-Wahlempfängereinheit MFCE über die Steuer- und Datenleitung SDL zur Anpassungseinheit AE und weiter über den zweiten Nachrichtenweg ND die Steuereinheit SE der sprachgesteuerten Wahlempfängereinheit SPWE aktiviert. Ferner ist die Fernsprechstelle FE über die Teilnehmerschaltung TS, das Koppelnetz KN und den vierten Nachrichtenweg NS zur Übertragung von Sprache und/oder Wahlsignale an die Anpassungseinheit AE durchgeschaltet.

Anstelle von Ruf- und Signaleinrichtungen einer Fernsprechvermittlungsanlage, die einen Wählton an die Fernsprechstelle FE übertragen würde, enthält die erfindungsgemäße Einrichtung eine Sprachausgabeeinheit SPA. Die Steuereinheit SE, die mit der Spracherkennungseinrichtung SPE und der Sprachausgabeeinheit SPA verbunden ist, setzt die Sprachausgabeeinheit SPA zur akustischen Bedienerführung des Teilnehmers ein. Hierzu liest die Sprachausgabeeinheit SPA aus einer zugeordneten Speichereinheit geeignete akustische Kommandos in Form von Sprache aus, z.B. "Bitte Wahlziel eingeben", und überträgt diese über den zweiten Nachrichtenweg NA zur Anpassungseinheit AE und von dort über die durchgeschaltete Leitung zum Lautsprecher des Handapparates der Fernsprechstelle FE.

Die Sprachausgabeeinheit SPA kann auch zentral anstelle der Ruf- und Signaleinrichtung in der Fernsprechvermittlungsanlage angeordnet sein.

Der Teilnehmer muß nicht mehr die unterschiedlichen Ruftöne, wie z.B. Besetztzeichen, Freizeichen, usw., unterscheiden, sondern erhält in einer Art "Dialogbetrieb" akustische Kommandos in Form von Sprache von der Sprachausgabeeinheit SPA übermittelt.

Das gewünschte Wahlziel oder ein Leistungsmerkmal der Fernsprechvermittlungsanlage wird nun durch akustische Eingabe von Wörtern und/oder Ziffern über das Mikrofon des Handapparates eingegeben. Die Sprachsignale werden zur Anpassungseinheit AE und von dort über den ersten Nachrichtenweg NE zur von der Steuereinheit SE gesteuerten Spracherkennungseinrichtung SPE gesendet. Dort werden die Wörter und/oder Ziffern mit den abgespeicherten Referenzmusterdaten verglichen und dem ähnlichsten Muster zugeordnet. Die Speicherplatznummer des ähnlichsten Referenzmusters adressiert den Teilnehmernamen (die Ziffern) oder das Leistungsmerkmal in einem zugeordneten Namenspeicher der Spracherkennungseinrichtung SPE.

Der angeführte Namenspeicher ist mit einem entsprechenden Rufnummernspeicher verbunden, aus dem die zu wählende Rufnummer ausgelesen und in einer Wahlzeichenumsetzereinheit in Steuersignale zur Wahlauslösung umgesetzt wird. Diese Signale werden von der Steuereinheit SE über den zweiten Nachrichtenweg zur Anpassungseinheit AE und weiter über die Steuer- und Datenleitung SDL zur Vermittlungssteuereinheit zum weiteren Aufbau der Verbindung übertragen. Außerdem bewirkt die Steuereinheit SE, daß die von der Spracherkennungseinrichtung SPE erkannte Sprachinformation über die Sprachausgabeeinheit SPE dem Teilnehmer als Bestätigung ausgegeben wird.

Am Ende des Wahlvorganges wird die erfindungsgemäße Einrichtung wie eine bekannte Mehrfrequenzcode-Wahlempfängereinheit MFCE abgeschaltet.

Falls eine akustische Eingabe des Teilnehmers von der Spracherkennungseinrichtung SPE nicht erkannt wird, wird der Teilnehmer durch eine akustische Fehlermeldung der Sprachausgabeeinheit SPA zur erneuten Eingabe aufgefordert.

Da ein Mehrfrequenzcode-Wahlempfänger MFC einerseits mit der Steuereinheit SE und andererseits über den ersten Nachrichtenweg NE parallel zur sprachgesteuerten Wahlempfängereinheit SPWE, wie Figur 2 zeigt, mit der Anpassungseinheit AE verbunden ist, kann die erfindungsgemäße Einrichtung auch als "transparente" Mehrfrequenzcode-Wahlempfängereinheit MFCE benutzt werden.

Gibt ein Teilnehmer sein Wahlziel oder das gewünschte Leistungsmerkmal über das Nummerntastenfeld der Fernsprechstelle FE ein, (auch in Kombination mit Spracheingabe) so detektiert der Mehrfrequenzcode-Wahlempfänger MFC das übertragene Wahlsignal. Dies wird der Steuereinheit SE mitgeteilt, wodurch die Spracherkennungseinrichtung SPE in ihrem Versuch diese Wahlsignale zu erkennen unterbrochen und in ihren Anfangszustand zurückgesetzt wird. Das detektierte MF-Signal wird von der Steuereinheit SE, wie zuvor auch beschrieben, zum weiteren Verbindungsaufbau weitergeleitet.

Durch die zentrale Anordnung der erfindungsgemäßen Einrichtung ergibt sich der Vorteil, daß zentrale Recheneinheiten einer Fernsprechvermittlungsanlage sowie das Koppelnete KN und dessen Steuerung nicht zusätzlich durch Soft- und Hardwaremodifikationen belastet werden. Es genügt die erfindungsgemäße Einrichtung gegen eine Mehrfrequenz-Wahlempfängereinheit MFCE auszutauschen.

Natürlich sind alle Nachrichtenwege (NA, NE, ND, NS) sowohl zur Übertragung von analogen Sprachsignalen geeignet, als auch als Zeitvielfachleitung zur Übertragung digitalisierter Sprachsignale auslegbar.

## Bezugszeichenliste

| | |
|---|---|
| sprecherunabhängige Spracherkennungseinrichtung | SPE |
| Sprachausgabeeinheit | SPA |
| Steuereinheit | SE |
| Steuerleitung | SL |
| Datenleitung | DL |
| erster Nachrichtenweg | NE |
| zweiter Nachrichtenweg | NA |
| Koppelnetz | KN |
| Mehrfrequenzcode-Wahlempfänger | MFC |
| Anpassungseinheit | AE |
| sprachgesteuerte Wahleinheit | SPWE |
| dritter Nachrichtenweg | (NS) |
| Teilnehmerschaltung | (TS) |
| Steuer- und Datenleitung | (SDL) |
| Mehrfrequenzcode-Wahlempfängereinheit | (MFCE) |

## Patentansprüche

1. Einrichtung zur Erkennung und Umsetzung von Wahlinformation sowie von Steuerinformation für Leistungsmerkmale einer Fernsprechvermittlungsanlage, mit einer sprachgesteuerten Wahlempfängereinheit (SPWE), die eine Spracherkennungseinrichtung (SPE) und eine Steuereinheit (SE) enthält, dadurch gekennzeichnet, daß die Spracherkennungseinrichtung (SPE) über einen ersten Nachrichtenweg (NE) und die Steuereinheit (SE) über einen zweiten Nachrichtenweg (ND) an eine Anpassungseinheit (AE) angeschlossen sind, daß ein Mehrfrequenzcode-Wahlempfänger (MFC) mit der Steuereinheit (SE) und über den ersten Nachrichtenweg (NE) parallel zur sprachgesteuerten Wahlempfängereinheit (SPWE) mit der Anpassungseinheit (AE) verbunden ist und daß die Anpassungseinheit (AE) die Schnittstelle zu einem Koppelnetz (KN) der Fernsprechvermittlungsanlage derart bildet, daß die genannte Einrichtung sich innerhalb der Fernsprechvermittlungsanlage wie ein Mehrfrequenzcode-Wahlempfänger verhält.

2. Einrichtung nach Anspruch 1, dadurch gekennzeichnet, daß die Fernsprechvermittlungsanlage eine Sprachausgabeeinheit (SPA) enthält, daß die Sprachausgabeeinheit (SPA) mit der Steuereinheit (SE) und der Spracherkennungseinrichtung (SPE) verbunden und über einen dritten Nachrichtenweg (NA) an die Anpassungseinheit (AE) angeschlossen ist, wodurch bei der Aktivierung der sprachgesteuerten Wahlempfängereinheit (SPWE) durch die Fernsprechvermittlungsanlage die Steuereinheit (SE) einerseits anstelle von Ruf- und Signaleinrichtungen die Sprachausgabeeinheit (SPA) zur sprachlichen Führung des Teilnehmers steuert und andererseits die Spracherkennungseinrichtung (SPE) zur Aufnahme der akustischen Wahl- und Steuerinformation und deren Umsetzung in einen Wahlcode steuert.

3. Einrichtung nach Anspruch 1 oder 2, dadurch gekennzeichnet, daß die Sprachausgabeeinheit (SPA) anstelle der zentralen Ruf- und Signaleinrichtung der Fernsprechvermittlungsanlage angeschlossen ist.

4. Einrichtung nach Anspruch 1 oder 2, dadurch gekennzeichnet, daß der Mehrfrequenzcode-Wahlempfänger (MFC) an die Steuereinheit (SE) der sprachgesteuerten Wahlempfängereinheit (SPWE) angeschlossen ist, wodurch die Spracherkennungseinrichtung (SPE) durch die Steuereinheit (SE) unterbrochen wird, wenn der Mehrfrequenzcode-Wahlempfänger (MFC) vom Teilnehmer über das Nummerntastenfeld eingegebene Wahloder Steuerinformation detektiert.

5. Einrichtung nach einem der vorherigen Ansprüche, dadurch gekennzeichnet, daß die Anpassungseinheit (AE) über einen vierten Nachrichtenweg (NS) an das Koppelnetz (KN) sowie über eine Teilnehmerschaltung (TS) mit der Fernsprechstelle (FE) verbunden ist und daß die Anpassungseinheit (AE) über eine Steuer- und Datenleitung (SDL) an die Fernsprechvermittlungsanlage geführt ist, wodurch einerseits die sprachgesteuerte Wahlempfängereinheit (SPWE) durch die Fernsprechvermittlungsanlage aktiviert und inaktiviert und andererseits die in einen Wahlcode umgesetzte Wahl- und Steuerinformation übertragen wird.

6. Einrichtung nach einem der vorherigen Ansprüche, dadurch gekennzeichnet, daß der sprachgesteuerte Wählempfänger (SPWE) mit an die Fernsprechvermittlungsanlage angeschlossenen Datenbanken oder Informationssysteme verbunden ist.

7. Einrichtung nach einem der vorherigen Ansprüche, dadurch gekennzeichnet, daß die Nachrichtenwege (NE, NA, ND, NS) aus Zeitvielfachleitungen bestehen, so daß die Wahl- und Steuerinformation in digitalisierter Form übertragen wird.

**Revendications**

1. Dispositif pour la reconnaissance et la conversion d'information de numérotation ainsi que d'information de commande pour des services d'un central téléphonique, comportant une unité réceptrice de numérotation commandée vocalement (SPWE), qui contient un dispositif de reconnaissance vocale (SPE) et une unité de commande (SE), caractérisé en ce que le dispositif de reconnaissance vocale (SPE) est relié par l'intermédiaire d'une première voie de communication (NE), et l'unité de commande (SE) par l'intermédiaire d'une seconde voie de communication (ND), à une unité d'adaptation (AE), en ce qu'un récepteur de numérotation en code multifréquence (MFC) est relié avec l'unité de commande (SE) et, par l'intermédiaire de la première voie de communication (NE) et en parallèle à l'unité réceptrice de numérotation commandée vocalement (SPWE), avec l'unité d'adaptation (AE), et en ce que l'unité d'adaptation (AE) forme l'interface avec un réseau de couplage (KL) du central téléphonique de telle sorte que le dispositif précité se comporte, à l'intérieur du central téléphonique, comme un récepteur de numérotation en code multifréquence.

2. Dispositif selon la revendication 1, caractérisé en ce que le central téléphonique contient une unité d'émission vocale (SPA), en ce que l'unité d'émission vocale (SPA) est reliée avec l'unité de commande (SE) et avec le dispositif de reconnaissance vocale (SPE) et est raccordée, par l'intermédiaire d'une troisième voie de communication (NA) avec l'unité d'adaptation (AE), de telle sorte que, lors de l'activation de l'unité réceptrice de numérotation commandée vocalement (SPWE) par le central téléphonique, l'unité de commande (SE) commande d'une part, à la place de dispositifs d'appel et de signalisation, l'unité d'émission vocale (SPA) pour un guidage vocal de l'abonné et commande, d'autre part, le dispositif de reconnaissance vocale (SPE) pour recevoir l'information acoustique de numérotation et de commande et sa conversion en un code de numérotation.

3. Dispositif selon une des revendications 1 ou 2, caractérisé en ce que l'unité d'émission vocale (SPA) est raccordée à la place du dispositif central d'appel et de signalisation du central téléphonique.

4. Dispositif selon une des revendications 1 ou 2, caractérisé en ce que le récepteur de numérotation en code multifréquence (MFC) est relié à l'unité de commande (SE) de l'unité réceptrice de numérotation commandée vocalement (SPWE), de sorte que le dispositif de reconnaissance vocale (SPE) soit interrompu par l'unité de commande (SE) quand le récepteur de numérotation en code multifréquence (MFC) détecte une information de numérotation ou de commande introduite par un abonné par l'intermédiaire du panneau à touches numériques.

5. Dispositif selon une des revendications précédentes, caractérisé en ce que l'unité d'adaptation (AE) est reliée, par l'intermédiaire d'une quatrième voie de communication (NS) au réseau de couplage (KN), et également par l'intermédiaire d'un circuit d'abonné (TS) avec le poste téléphonique (FE) et en ce que l'unité d'adaptation (AE) est raccordée, par l'intermédiaire d'un conducteur de commande et de données (SDL) avec le central téléphonique, de sorte que, d'une part, l'unite réceptrice de numérotation commandée vocalement (SPWE) est activée et désactivée par le central téléphonique et que, d'autre part, l'information de numérotation et de commande convertie en un code de numérotation est transmise.

6. Dispositif selon une des revendications précédentes, caractérisé en ce que le récepteur de numérotation commandé vocalement (SPWE) est relié avec des banques de données ou des systèmes d'informations raccordés au central téléphonique.

7. Dispositif selon une des revendications précédentes, caractérisé en ce que les voies de communication (NE, NA, ND, NS) se composent de conducteurs omnibus de telle sorte que l'information de numérotation et de commande soit transmise sous une forme convertie numériquement.

## Claims

1. Facility for detecting and converting dial information and control information for service features of a telephone switching system, comprising a voice-controlled dial signal receiver unit (SPWE) including a voice recognition unit (SPE) and a control unit (SE), characterized in that the voice recognition unit (SPE) and the control unit (SE) are connected to an adapter unit (AE) by a first message path (NE) and a second message path (ND), respectively, that a multifrequency code receiver (MFC) is connected to the control unit (SE) and, via the first message path (NE) to the adapter unit (AE) in parallel with the voice-controlled dial signal receiver unit (SPWE), and that the adapter unit (AE) constitutes the interface to a switching network (KN) of the telephone switching system, such that said facility behaves within the telephone switching system like a multifrequency code receiver.

2. A facility as claimed in claim 1, characterized in that the telephone switching system includes a voice output unit (SPA), that the voice output unit (SPA) is connected with the control unit (SE) and the voice recognition unit (SPE) and, by a third message path (NA), to the adapter unit (AE), so that, if the voice-controlled dial signal receiver unit (SPWE) is activated by the telephone switching system, the control unit (SE), instead of controlling ringing and signalling equipment, will control, on the one hand, the voice output unit (SPA) to provide voice prompts to the subscriber and, on the other hand, the voice recognition unit (SPE) to receive the acoustic dial and control information and convert it into a dial code.

3. A facility as claimed in claim 1 or 2, characterized in that instead of the central ringing and signalling equipment of the telephone switching system, the voice output unit (SPA) is connected.

4. A facility as claimed in claim 1 or 2, characterized in that the multifrequency code receiver (MFC) is connected to the control unit (SE) of the voice-controlled dial signal receiver unit (SPWE), so that the voice recognition unit (SPE) is interrupted by the control unit (SE) when the multifrequency code receiver (MFC) detects dial or control information entered by the subscriber through a numeric keypad.

5. A facility as claimed in any one of the preceding claims, characterized in that the adapter unit (AE) is connected by a fourth message path (NS) to the switching network (KN) and through a line circuit (TS) to a telephone station (FE), and that the adapter unit (AE) is connected to the telephone switching system by a control and data line (SDL) over which the voice-controlled dial signal receiver unit (SPWE) is activated and deactivated by the telephone switching system, and over which the dial and control information converted to a dial code is transmitted.

6. A facility as claimed in any one of the preceding claims, characterized in that the voice-controlled dial signal receiver (SPWE) is connected to data banks or information systems connected to the telephone switching system.

7. A facility as claimed in any one of the preceding claims, characterized in that the message paths (NE, NA, ND, NS) are time-division-multiplex lines, so that the dial and control information is transmitted in digitized form.

Fig.1

Fig. 2